# EUROPÄISCHE PATENTSCHRIFT

(11) **EP 2 511 065 B1**
(45) Veröffentlichungstag und Bekanntmachung des Hinweises auf die Patenterteilung: **04.12.2013**
(21) Anmeldenummer: 11162438.3
(22) Anmeldetag: 14.04.2011
(51) Int. Cl.: B29C 45/17

(54) **Gießvorrichtung und Gießverfahren zur Herstellung eines hohlen Gussgegenstandes**
Moulding method and device for producing a hollow moulded object
Dispositif et procédé de moulage pour la fabrication d'un objet creux

(43) Veröffentlichungstag der Anmeldung: 17.10.2012
(73) Patentinhaber: Röchling Automotive AG & Co. KG, 68165 Mannheim (DE)
(72) Erfinder: De Metri, Ivan, 39100 Bozen (IT); Di Pauli, Ferdinand, 39100 Bozen (IT); Chini, Fabrizio, 38060 Isera (IT)
(74) Vertreter: Trossin, Hans-Jürgen

(56) Entgegenhaltungen:
- EP-A1- 2 226 176
- WO-A1-2009/138431
- WO-A2-2010/007142
- JP-A- 63 143 966
- JP-A- 2000 197 852
- JP-U- 57 062 672

## Beschreibung

Die vorliegende Anmeldung betrifft eine Gießvorrichtung zur Herstellung eines hohlen Gussgegenstandes, umfassend: ein Formwerkzeug mit einer Kavität, eine Füllvorrichtung zum Einfüllen von Gießmaterial in fließfähigem Zustand in die Kavität, ein Projektil sowie eine Verdrängungsvorrichtung, die dazu ausgebildet ist, das Projektil zur Bewegung entlang einer Bewegungstrajektorie in das in die Kavität eingefüllte Gießmaterial anzutreiben.

Eine derartige Gießvorrichtung ist beispielsweise in der Druckschrift WO 2010/007142 A2 offenbart.

Generell ist es bekannt, Gegenstände aus Kunststoff, wie in der vorstehend erwähnten Druckschrift dargestellt, durch Spritzgießen, oder auch durch Blasformen herzustellen. Im Vergleich zum Blasformverfahren lassen sich im Spritzgussverfahren Gussgegenstände mit einer höheren Fertigungsgenauigkeit erzeugen, allerdings sind zur Herstellung eines Hohlkörpers weitere Fertigungsschritte nötig.

Beispielsweise können zunächst im Spritzgussverfahren hergestellte Halbschalen später zu einem Hohlkörper zusammengeschweißt werden. Alternativ kann, wie in der oben genannten Druckschrift beschrieben, zunächst Gießmaterial im fließfähigen Zustand in die Kavität eines Formwerkzeugs eingefüllt und dann ein innerer Bereich der Kavität von fließfähigem Gießmaterial durch ein Projektil entleert werden, welches von der Verdrängungseinrichtung zur Bewegung entlang der Bewegungstrajektorie in das Gießmaterial hinein, vorzugsweise durch das Gießmaterial hindurch, angetrieben wird und so das fließfähige Gießmaterial aus dem Inneren der Kavität verdrängt, beispielsweise in eine mit der Kavität in Strömungsverbindung stehende oder bringbare Nebenkavität. Damit verbleibt in der Kavität das den Wänden der Kavität nahe Gießmaterial, wodurch ein hohler Gussgegenstand entsteht, der sich längs einer Gegenstandsachse erstreckt, welche der Bewegungstrajektorie des Projektils entspricht. Anstelle eines Projektils kann auch ein Fluid wie Gas oder Wasser zur Verdrängung des Gießmaterials verwendet werden.

Eine Gießvorrichtung, in welcher die Fluidinjektionstechnik verwendet wird, ist beispielsweise aus der Druckschrift US 5759459 A bekannt.

Dabei bietet die Verwendung von Gas den Vorteil der einfachen Anwendung. Weiterhin passt sich das von der Verdrängungsvorrichtung unter Druck in die Kavität eingelassene Gas beim Durchströmen der Kavität an deren Form an. Daher kann diese Technik zur Erzeugung von hohlen Gussgegenständen mit im Wesentlichen konstanter Wandstärke verwendet werden, die entlang der Gegenstandsachse aufeinander abfolgend angeordnete Gegenstandsabschnitte aufweisen, deren Querschnitte senkrecht zur Gegenstandsachse unterschiedlich geformt sind, und die hier kurz als hohle Gussgegenstände mit variablem Querschnitt bezeichnet werden.

Die durch die Gasinjektionstechnik erreichbaren Wandstärken sind jedoch verhältnismäßig hoch, was zu einem unvorteilhaft hohen Bauteilgewicht führt. Ferner ist die Qualität der Innenoberflächen auf diese Weise erzeugbarer Hohlkörper nicht besonders gut und die erreichbaren Zykluszeiten sind verhältnismäßig hoch.

Da Wasser im Gegensatz zu Gas nicht komprimierbar ist, lassen sich durch Wasserinjektionstechnik Bauteile mit geringerer Wandstärke und damit geringerem Bauteilgewicht herstellen. Ferner können aufgrund der hohen Wärmekapazität von Wasser geringere Zykluszeiten realisiert werden als bei der Verwendung von Gas. Allerdings muss ein bestimmter Wasserdruck aufrecht erhalten werden werden, um eine ausreichende Qualität der Innenoberfläche des hergestellten hohlen Gussgegenstands zu erzielen.

Die aus der WO 2010/007142 A2 bekannte Verwendung eines Projektils ermöglicht es, bei einer durch die Kavität gegebenen Außengeometrie des herzustellenden hohlen Gussgegenstandes die erzielbare Wandstärke auf Basis des Projektildurchmessers einzustellen, so dass insbesondere auch im Vergleich zur Wasserinjektion noch geringere Wandstärken und damit geringere Bauteilgewichte erreicht werden können. Die Zykluszeit ist folglich geringer als bei der Gasinjektion.

Der Hauptnachteil der Projektilinjektion ist jedoch, dass in der bekannten Gießvorrichtung lediglich solche hohle Gussgegenstände mit konstanter Wandstärke hergestellt werden können, die auch einen konstanten Querschnitt aufweisen, da das verwendete Projektil starr ist. Beispielsweise wird in der WO 2010/007142 A2 ein Projektil verwendet, welches aus dem gleichen oder einem härterem Gießmaterial besteht wie der hohle Gussgegenstand.

Die EP2226176 A1 offenbart eine Vorrichtung und ein Verfahren für die Projektil-Injektionstechnik, bei dem nach der Injektion von Kunststoffschmelze naturgemäß an den Randbereichen der Kavität und an der Injektoroberfläche eine erstarrte Kunststoffschicht entsteht. Die an der Injektoroberfläche erstarrte Kunststoffschicht bildet eine verfestigte Injektorkappe, welche als Projektil dient und die ebenfalls aus dem gleichen Kunststoff wie das herzustellende Kunststoffrohr besteht. Aufgrund der Flexibilität des noch weichen Projektils bei der Fluidinjektion können Rohre mit unterschiedlichem Querschnitt hergestellt werden. Außerhalb der Spritzgießverfahren ist die Verwendung flexibler Projektile durch die JP2000197852A bei der Innenbeschichtung von Rohren, welche unterschiedliche Durchmesser aufweisen, bekannt.

Vor dem Hintergrund der WO 2010/007142 A2 ist es die Aufgabe der vorliegenden Erfindung, die bekannte Gießvorrichtung so weiterzubilden, dass die Herstellung von hohlen Gussgegenständen mit im Wesentlichen konstanter Wandstärke und variablem Querschnitt auch in der Projektilinjektionstechnik ermöglicht wird.

Diese Aufgabe wird dadurch gelöst, dass bei der Gießvorrichtung der eingangs genannten Art die Kavität wenigstens zwei entlang der Bewegungstrajektorie des Projektils aufeinander folgend angeordnete Kavitätsabschnitte aufweist, deren Querschnitte senkrecht zur Bewegungstrajektorie unterschiedlich geformt sind, und dass das Projektil einen aus einem bis zu 350°C temperatur beständigen Verformungsmaterial gebildeten Verformungsabschnitt aufweist, wobei das Verformungsmaterial eine geringere elastische Drucksteifigkeit als das Gießmaterial in dem Sinne aufweist, dass ein aus dem Verformungsmaterial bestehender, würfelförmiger Probekörper eine geringere elastische Drucksteifigkeit aufweist als ein in Gestalt und Größe gleicher Probekörper, der aus dem Gießmaterial im erstarrten Zustand besteht.

Dabei ist die elastische Drucksteifigkeit des Probekörpers das Verhältnis aus einer senkrecht auf eine Würfelseite einwirkenden Druckkraft und der dadurch erzielten elastischen relativen Längenänderung (Stauchung) des Probekörpers parallel zur Kraftrichtung. Folglich wird ein Probekörper aus dem Verformungsmaterial unter der gleichen Druckbelastung stärker elastisch gestaucht als ein in Gestalt und Größe gleicher Probekörper aus dem Gießmaterial im erstarrten Zustand. Hierbei sind, wie sich schon aus dem Begriff der elastischen Drucksteifigkeit ergibt, das Gießmaterial und das Verformungsmaterial so auszuwählen, dass für solche Druckkräfte, die bei der Bewegung des Projektils auf dieses einwirken, das Verformungsmaterial elastisch verformbar ist und das Gießmaterial im erstarrten Zustand ebenfalls (wenn auch in geringerem Ausmaß) elastisch verformbar ist oder im Grenzfall durch diese Druckkräfte gar nicht beziehungsweise nicht in merklichem Ausmaß verformt wird. Ein solches Vergleichsexperiment an Probekörpern im Hinblick auf die elastische Drucksteifigkeit kann zum Beispiel bei Raumtemperatur, bevorzugt jedoch bei einer Temperatur durchgeführt werden, die in einem Betriebstemperatur-Bereich für die Herstellung von hohlen Gussgegenständen mit der Gießvorrichtung liegt.

Durch die Verwendung der erfindungsgemäßen Vorrichtung wird ermöglicht, dass sich das Projektil bei seiner Bewegung durch die Kavität zumindest im Verformungsabschnitt an die Querschnittsform der Kavität des Formwerkzeugs und des an den Kavitätswänden erstarrten bzw. erstarrenden Gießmaterials elastisch anpasst und auf diese Weise einen hohlen Gussgegenstand mit im Wesentlichen konstanter Wandstärke und variablem Querschnitt erzeugt.

Das erfindungsgemäß vorgesehene Projektil ist in der Lage, sich bei der Bewegung durch die Kavität an deren Konturen anzupassen, wobei es immer noch den Hauptzweck eines Projektils im Projektilinjektionsverfahren erfüllt, nämlich die noch plastische Seele des Gießmaterials wie ein Kolben hinauszuschieben. Dabei kann das Projektil gegenüber der Kavität eine Dichtfunktion erfüllen und so ein Vorbeiströmen eines von der Verdrängungsvorrichtung verwendeten flüssigen oder gasförmigen Antriebsmediums des Projektils am Projektil vorbei verhindern, was es ermöglicht, definierte, wiederholgenaue und dünne Wandstärken bei dem hohlen Gussgegenstand zu erreichen.

Das Projektil kann durch die sich an den Wänden der Kavität bildende, wenigstens zum Teil erstarrte oder erstarrende, nicht mehr bzw. nur noch schwach plastische Gießmaterial-Haut auf seiner Bewegungstrajektorie gehalten werden.

Anders ausgedrückt weist das Projektil zumindest im Verformungsabschnitt eine eher weichelastische Verformungscharakteristik auf, während die Gießmaterial-Seele im Betrieb der Gießvorrichtung temperaturbedingt eine vorwiegend viskose Verformungscharakteristik aufweist und die Gießmaterial-Haut sich, gegebenenfalls temperaturbedingt, weniger weichelastisch verhält als der Verformungsabschnitt des Projektils.

Aufgrund des Verformungsverhaltens des erfindungsgemäß vorgesehenen Projektils wird die Dichtfunktion des Projektils gegenüber der Kavität verbessert und so ein Vorbeiströmen des Antriebsmediums an dem Projektil vorbei verhindert oder wenigstens verzögert. Sowohl die Querschnittsform der Kavität senkrecht zur Bewegungstraktorie als auch die entsprechende Querschnittsfläche können entlang der Bewegungstrajektorie innerhalb gewisser, durch die Verformbarkeit des Projektils gegebener Grenzen variieren, was die Herstellung hohler Gussgegenstände mit entsprechend variierender Querschnittsform oder/und Querschnittsfläche ermöglicht.

Grundsätzlich kann vorgesehen sein, dass nur ein Teil des Projektils aus dem Verformungsmaterial besteht, das Projektil beispielsweise einen starren Kern aufweist. In diesem Fall sollte der Durchmesser des starren Kerns natürlich geringer sein als der minimale Durchmesser der Kavität.

Um die Herstellung des Projektils zu erleichtern, kann jedoch auch vorgesehen sein, dass das gesamte Projektil aus dem Verformungsmaterial gebildet ist.

Um eine Beschädigung des Projektils durch das heiße Gießmaterial im fließfähigem Zustand zu vermeiden umfasst dass das Verformungsmaterial ein bis zu 350 °C temperaturbeständiges Material. Hier hat sich besonders Silikon als geeignetes Material herausgestellt.

Das Projektil kann zu einer besonders gleichmäßigen Bewegung durch die Kavität angetrieben werden, wenn das Projektil zuvor in der Art einer Projektil-Kappe auf eine Düsenanordnung der Verdrängungsvorrichtung aufgesetzt werden kann.

Dazu kann vorgesehen sein, dass das Projektil im Wesentlichen hohl ausgebildet ist, wobei ein erstes Längsende des Projektils offen und ein zweites Längsende geschlossen ausgebildet ist. Hierbei ist das erste offene Längsende im Betrieb der Gießvorrichtung das in Bewegungsrichtung des Projektils nachlaufende Längsende, das zweite geschlossene Längsende ist das im Betrieb in Bewegungsrichtung vorauseilende Längsende. Das in Bewegungsrichtung des Projektils nachlaufende (hintere), offene Ende des Projektils kann auch als Lippendichtung fungieren und ein Vorauseilen eines Austriebsmediums weiter verzögern beziehungsweise verhindern.

Zur Erreichung einer möglichst gleichmäßigen Druckbelastung im Betrieb, welche dafür sorgt, dass sich das Projektil im Betrieb während des Passierens eines Kavitätsabschnitts mit konstantem Querschnitt nicht in unerwünschter Weise durch den Druck des Gießmaterials verformt oder beschädigt wird, kann vorgesehen sein, dass das Projektil mit einer im Wesentlichen konstanten Wandstärke ausgebildet ist.

Gemäß einer bevorzugten Weiterbildung der vorliegenden Erfindung kann vorgesehen sein, dass die Querschnittsflächen der beiden Kavitätsabschnitte senkrecht zur Bewegungstrajektorie im Wesentlichen gleich groß sind. In diesem Fall kann das Projektil seine Form an den jeweiligen Querschnitt anpassen, ohne eine zu starke Formänderung entlang der Bewegungsrichtung zu erfahren. Weiterhin kann auf diese Weise vermieden werden, dass im Betrieb ein zu starker Druckabfall eines Fluids auftritt, welches dazu benutzt wird, das Projektil zur Bewegung entlang der Bewegungstrajektorie anzutreiben.

Die Herstellung hohler Gussgegenstände mit variablem Querschnitt ergibt sich häufig aus der Notwendigkeit, einen zum Beispiel rohrförmigen Hohlkörper in einem vorgegebenen Bauraum mit verschiedenen darin vorgesehenen Objekten von einem Startort zu einem Zielort zu führen. Dabei gibt es zwei Alternativen. Zum einen kann ein rohrförmiger Hohlkörper mit konstantem Querschnitt an den einzelnen Objekten vorbei geführt werden, wobei gegebenenfalls die Fertigung eines Hohlkörpers mit einer mehrfach gekrümmten, kompliziert geformten Gegenstandsachsee notwendig sein kann. Alternativ kann ein Hohlkörper verwendet werden, dessen Querschnitt lokal an die durch die Objekte vorgegebenen Beschränkungen angepasst ist.

Für diesen zweiten Fall kann vorgesehen sein, dass die Kavität wenigstens drei entlang der Bewegungstrajektorie des Projektils aufeinander folgend angeordnete Kavitätsabschnitte aufweist, deren Querschnitte senkrecht zur Bewegungstrajektorie unterschiedlich geformt sind, wobei die Form des Querschnitts senkrecht zur Bewegungstrajektorie des mittleren Kavitätsabschnitts sich von der Form des Querschnitts senkrecht zur Bewegungstrajektorie der beiden anderen Kavitätsabschnitte unterscheidet. Der Begriff "mittlerer" Kavitätsabschnitt bezieht sich dabei auf die Abfolge entlang der Bewegungstrajektorie.

Hinsichtlich der entlang der Bewegungstrajektorie des Projektils aufeinander folgend angeordneten Kavitätsabschnitte kann vorgesehen sein, dass der Querschnitt in den jeweiligen Kavitätsabschnitten konstant ist und sich beim Übergang zwischen den Kavitätsabschnitten sprunghaft ändert, also in der Art einer Stufe. Um eine gleichmäßige Innenoberfläche des hohlen Gussgegenstands zu erzielen ist jedoch bevorzugt, dass sich der Querschnitt senkrecht zur Bewegungstrajektorie kontinuierlich ändert, zum Beispiel innerhalb eines Kavitätsabschnitts oder/und am Übergang zwischen zwei entlang der Bewegungstrajektorie des Projektils direkt aufeinander folgend angeordneten Kavitätsabschnitten.

Zum Antreiben des Projektils kann eine Düseneinrichtung verwendet werden, die ein Fluid unter hohem Druck in die Kavität abgibt und damit das Projektil vorantreibt. Um zu einer besonders raschen Erstarrung des Gießmaterials und damit zu einer geringen Zykluszeit beizutragen, kann hierbei Wasser als Fluid zum Einsatz kommen. In anderen Worten kann vorgesehen sein, dass die Verdrängungsvorrichtung eine Düseneinrichtung umfasst, die dazu ausgebildet ist, das Projektil durch Ausstoß von unter Druck stehendem Wasser entlang der Bewegungstrajektorie in das in die Kavität eingefüllte Gießmaterial einzutreiben.

Gemäß einem weiteren Aspekt betrifft die vorliegende Erfindung auch ein Gießverfahren zur Herstellung eines hohlen Gussgegenstands, umfassend die folgenden Schritte: Einfüllen eines Gießmaterials im fließfähigen Zustand in eine Kavität eines Formwerkzeugs und Antreiben eines Projektils zu einer Bewegung entlang einer Bewegungstrajektorie in das in die Kavität eingefüllte Gießmaterial.

Ein solches Gießverfahren ist ebenfalls aus der einleitend erwähnten Druckschrift WO 2010/007142 A2 bekannt. Vor dem Hintergrund dieses Standes der Technik besteht die Aufgabe der vorliegenden Erfindung gemäß dem weiteren Aspekt darin, das bekannte Gießverfahren so weiterzubilden, dass die Herstellung von hohlen Gussgegenständen mit im Wesentlichen konstanter Wandstärke und variablem Querschnitt ermöglicht wird.

Diese Aufgabe wird erfindungsgemäß durch den kennzeichnenden Teil des Anspruchs 1 gelöst.

Auf diese Weise kann sich das Projektil an eine entlang der Bewegungstrajektorie variierende Form des Querschnitts der Kavität senkrecht zur Bewegungstrajektorie anpassen, ohne das an den Kavitätswänden erstarrte beziehungsweise erstarrende Gießmaterial zu beschädigen.

Für das erfindungsgemäße Gießverfahren ergeben sich die gleichen Vorteile, die für die erfindungsgemäße Gießvorrichtung erläutert wurden. Auch enthält die vorstehende Beschreibung der erfindungsgemäßen Gießvorrichtung und deren vorteilhafte Weiterbildungen einige Verfahrensaspekte, so dass zur Erläuterung des erfindungsgemäßen Gießverfahrens ausdrücklich auch auf die vorstehende Beschreibung der erfindungsgemäßen Gießvorrichtung verwiesen wird.

Es soll nicht ausgeschlossen sein, dass die Verformung des Projektils auch einen plastischen Anteil aufweist. Zur Herstellung hohler Gussgegenstände mit variierendem Querschnitt und möglichst gleichmäßiger Wandstärke ist jedoch bevorzugt, dass sich das Projektil während seiner Bewegung entlang der Bewegungstrajektorie vorwiegend elastisch verformt. Besonders bevorzugt ist die Verformung vollständig elastisch, was zum Beispiel die Herstellung eines Rohres mit einer lokalen Engstelle und ansonsten im Wesentlichen konstantem Querschnitt ermöglicht.

Um eine Anpassung des Projektils während seiner Bewegung an unterschiedlich geformte Kavitätsquerschnitte zu erzielen, erfolgt die Verformung des Projektils bevorzugt senkrecht zur Bewegungstrajektorie. Dazu kann vorgesehen sein, dass sich das Projektil während seiner Bewegung entlang der Bewegungstrajektorie derart verformt, dass während eines Bewegungsabschnitts ein radialer Abstand zwischen einer im Wesentlichen parallel oder tangential zur Bewegungstrajektorie verlaufenden Projektil-Längsachse und einer Projektil-Außenwand zumindest in einem axialen Abschnitt des Projektils und in einem Umfangsabschnitt des Projektils kleiner wird. Die Begriffe "axial" und "Umfangsabschnitt" beziehen sich dabei auf die Projektil-Längsachse. Ebenso kann der bezeichnete Abstand bei der Verformung des Projektils in einem anderen Umfangsabschnitt als dem vorgenannten größer werden.

Zur Herstellung eines hohlen Gussgegenstandes mit variierendem Durchmesser kann eine Kavität nicht nur mit variierender Querschnittsform sondern auch mit variierender Querschnittsfläche benötigt werden. Hierbei kann vorgesehen sein, dass sich das Projektil während seiner Bewegung entlang der Bewegungstrajektorie derart verformt, dass während eines Bewegungsabschnitts ein radialer Abstand zwischen einer im Wesentlichen parallel oder tangential zur Bewegungstrajektorie verlaufenden Projektil-Längsachse und einer Projektil-Außenwand zumindest in einem axialen Abschnitt des Projektils über den gesamten Umfang des Projektils kleiner wird.

Insbesondere in diesem Fall kann sich das Projektil derart verformen, dass es während des vorstehend erwähnten Bewegungsabschnitts in Richtung der Projektil-Längsachse länger wird.

Es kann vorgesehen sein, dass das Projektil bei der Bewegung entlang der Bewegungstrajektorie derart gegenüber der Kavität dichtend wirkt, dass es verhindert, dass ein Antriebsmedium, welches zum Antreiben des Projektils verwendet wird, an dem Projektil bei seiner Bewegung entlang der Bewegungstrajektorie vorbeiströmt. Auf diese Weise erfolgt der Antrieb des Projektils besonders kontrolliert, was die Qualität der mit Hilfe dieses Verfahrens hergestellten hohlen Gussgegenstände verbessert.

Nachfolgend wird die vorliegende Erfindung anhand von zwei besonders bevorzugten Ausführungsbeispielen näher erläutert, welche in den beiliegenden Figuren illustriert sind. Dabei zeigen:
- Fig. 1: eine schematische Längsschnittdarstellung einer Gießvorrichtung gemäß einem ersten Ausführungsbeispiel der vorliegenden Erfindung,
- Fig. 2: in den Teilfiguren 2a bis 2c den Querschnitt der Kavität der Gießvorrichtung aus Figur 1 entlang den Schnittebenen IIa, IIb und IIc in Figur 1,
- Fig. 3: einen mit der in Fig. 1 dargestellten Gießvorrichtung hergestellten hohlen Gussgegenstand,
- Fig. 4: in den Teilfiguren 4a bis 4c den Querschnitt des hohlen Gussgegenstand aus Figur 3 entlang den Schnittebenen IVa, IVb und IVc in Figur 3.
- Fig. 5: eine vergrößerte Darstellung des in der Gießvorrichtung aus Figur 1 eingesetzten Projektils.
- Fig. 6: eine schematische Längsschnittdarstellung einer Gießvorrichtung gemäß einem zweiten Ausführungsbeispiel der vorliegenden Erfindung,
- Fig. 7: in den Teilfiguren 7a bis 7c den Querschnitt der Kavität der Gießvorrichtung aus Figur 6 entlang den Schnittebenen VIIa, VIIb und VIIc in Figur 6
- Fig. 8: einen mit der in Fig. 6 dargestellten Gießvorrichtung hergestellten hohlen Gussgegenstand,
- Fig. 9: in den Teilfiguren 9a bis 9c den Querschnitt des hohlen Gussgegenstand aus Figur 8 entlang den Schnittebenen IXa, IXb und IXc in Figur 8.

Bei allen Abbildungen handelt es sich um stark vereinfachte, schematische Darstellungen, die insbesondere nicht maßstabsgetreu sind.

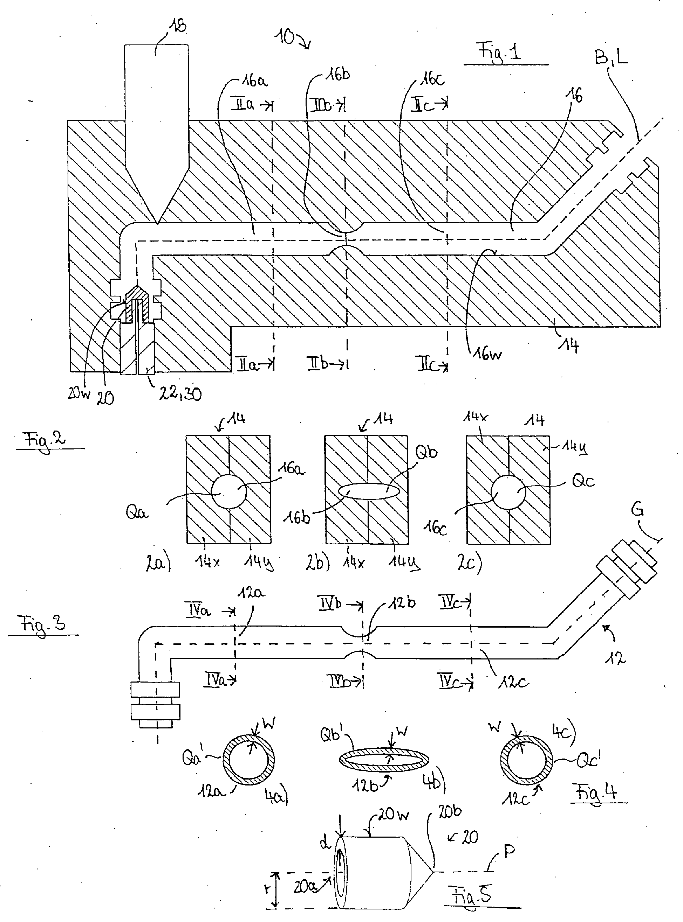

Fig. 1 zeigt eine Längsschnittdarstellung einer Gießvorrichtung 10 gemäß einem ersten Ausführungsbeispiel der vorliegenden Erfindung, welche ein Formwerkzeug 14 mit einer Kavität 16 umfasst, eine Füllvorrichtung 18, welche hier nur stark schematisiert dargestellt ist und zum Einfüllen von fließfähigem Gießmaterial in die Kavität 16 dient, ein Projektil 20 sowie eine Verdrängungsvorrichtung 22 in Form einer Düsenanordnung 30, die dazu ausgebildet ist, das Projektil 20 zur Bewegung entlang einer Bewegungstrajektorie B in das in die Kavität 16 durch die Füllvorrichtung 18 eingefüllte Gießmaterial anzutreiben.

Die Bewegungstrajektorie B folgt einem gekrümmten Verlauf, welcher dem Verlauf der Längsachse L der Kavität 16 und dem Verlauf der Gegenstandsachse G (vgl. Fig. 3) des in der Gießvorrichtung 10 herzustellenden hohlen Gussgegenstands 12 (vgl. Fig. 3) entspricht.

Die Kavität 16 umfasst entlang der Bewegungstrajektorie B drei aufeinander folgend angeordnete Kavitätsabschnitte 16a, 16b und 16c. Dabei sind die in Figur 2 dargestellten Querschnitte Qa und Qb bzw. Qc und Qc der Kavitätsabschnitte 16a und 16b bzw. 16b und 16c senkrecht zur Bewegungstrajektorie B jeweils unterschiedlich geformt. Insbesondere sind die Querschnitte Qa, Qc der beiden äußeren Kavitätsabschnitte 16a, 16c kreisförmig und im Wesentlichen gleich groß, während der Querschnitt Qb des mittleren Kavitätsabschnitts 16b die Form eines langgezogenen Ovals aufweist, dessen Flächeninhalt im vorliegenden Ausführungsbeispiel annähernd demjenigen der anderen Kavitätsabschnitte 16a, 16c entspricht. Der Übergang zwischen den in Figur 2 dargestellten Querschnitten Qa, Qb, Qc kann kontinuierlich oder auch stufenförmig ausgebildet sein. Weiterhin zeigt Figur 2, dass das Formwerkzeug 14 zwei Formwerkzeughälften 14x und 14y umfasst.

Fig. 3 zeigt einen hohlen Gussgegenstand 12 in Form eines gebogenen Rohres, der mit der Gießvorrichtung 10 aus Fig. 1 hergestellt wurde.

Ein solcher Gussgegenstand 12 kann verwendet werden, um an einer lokalen Engstelle oder einem Hindernis vorbei geführt zu werden.

Ferner sind in Fig. 4 ebenfalls die Querschnitte Qa', Qb' und Qc' des Gussgegenstandes 12 in den drei Gegenstandsabschnitten 12a, 12b und 12c dargestellt, welche den drei Kavitätsabschnitten 16a, 16b und 16c entsprechen. Wie Figur 4 zeigt, ist die Wandstärke w in allen drei Gegenstandsabschnitten etwa gleich und entlang des Umfangs des hohlen Gussgegenstands 12 im Wesentlichen konstant.

Fig. 5 zeigt das in der Gießvorrichtung 10 verwendete Projektil 20 in einer etwas vergrößerten Dartstellung. Das Projektil 20 erstreckt sich längs einer Projektil-Längsachse P von einem ersten Längsende 20a zu einem zweiten Längsende 20b, wobei es an dem ersten Längsende 20a offen und an dem zweiten Längsende 20b geschlossen ausgebildet ist, und im Wesentlichen die Form eines Hohltorpedos mit konstanter Wandstärke d aufweist. Andererseits sind auch andere Projektilformen denkbar, beispielsweise die Form einer an einem Ende offenen Hohlkugel.

Das Projektil 20 ist beispielsweise aus temperaturbeständigem Silikon hergestellt, welches besonders geeignet ist, sich bei der Bewegung durch die Kavität, etwa durch zeitweise Verringerung eines radialen Abstands r zwischen der während der Bewegung im Wesentlichen parallel bzw. tangential zur Bewegungstrajektorie verlaufenden Projektil-Längsachse P und einer Projektil-Außenwand 20w über den gesamten Umfang des Projektils 20, elastisch an die Querschnittsform der Kavität sowie an das an den Kavitätswänden 16w erstarrte Gießmaterial anzupassen und dennoch den beim Gießvorgang auftretenden Temperaturen und Drücken standhält. Im vorliegenden Beispiel ist das gesamte Projektil aus dem Verformungsmaterial gebildet, es soll aber auch nicht ausgeschlossen sein, dass nur ein als Verformungsabschnitt bezeichneter Abschnitt des Projektils, etwa eine äußere Hülle, aus dem Verformungsmaterial gebildet ist und das Projektil zum Beispiel einen starren Kern aufweist.

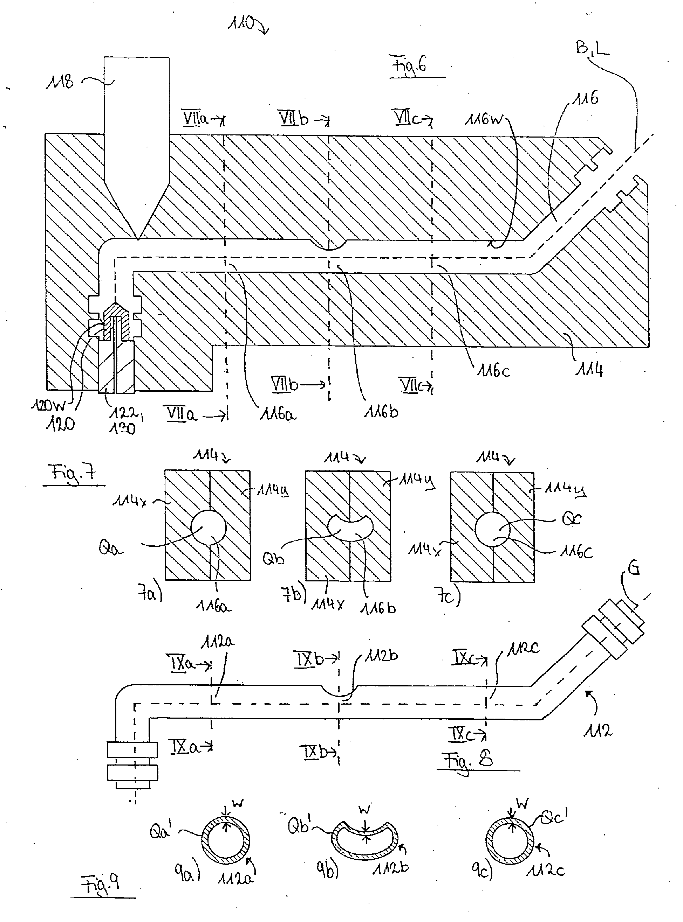

Figur 6 zeigt eine sehr ähnliche Gießvorrichtung 110 gemäß einem zweiten Ausführungsbeispiel der vorliegenden Erfindung.

Merkmale des zweiten Ausführungsbeispiels, die solchen des ersten Ausführungsbeispiels entsprechen, sind in den Figuren mit Bezugszeichen versehen, die durch Addition der Zahl 100 aus den Bezugszeichen der entsprechenden Merkmale des ersten Ausführungsbeispiels hervorgehen. Sofern Buchstaben zur Kennzeichnung in den Figuren verwendet werden, werden zur Bezeichnung entsprechender Merkmale die gleichen Buchstaben eingesetzt. Zur Vermeidung von Wiederholungen wird das zweite Ausführungsbeispiel nur insoweit beschrieben, als es sich von dem ersten Ausführungsbeispiel unterscheidet, auf dessen vorstehende Beschreibung ansonsten verwiesen wird.

Die in Figur 6 dargestellte Gießvorrichtung 110 unterscheidet sich von der in Figur 1 dargestellten Gießvorrichtung 10 lediglich dadurch, dass sich die Form der Kavität im mittleren Kavitätsabschnitt 116b nicht nur ellipsenförmig verschmälert, sondern dass, wie in Figur 7 dargestellt, der Querschnitt Qb eine Halbmondform aufweist.

Entsprechend weist auch der mit der Gießvorrichtung 110 hergestellte, in Figur 8 dargestellte hohle Gussgegenstand 112 im mittleren Gegenstandsabschnitt 112b (vgl. Fig. 9) eine Halbmondform auf.

Abschließend soll beispielhaft ein Ausführungsbeispiel eines mit der Gießvorrichtung 10 durchgeführten, erfindungsgemäßen Gießverfahrens beschrieben werden, was jedoch auch völlig analog auf die Gießvorrichtung 110 übertragen werden kann.

Zunächst wird bei geöffnetem Formwerkzeug 14 das Projektil 20 auf die Düsenanordnung 30 der Verdrängungsvorrichtung 22 aufgesetzt.

Anschließend wird das Formwerkzeug 14 geschlossen. Durch die Füllvorrichtung 18 wird fließfähiges Gießmaterial in die Kavität 16 eingefüllt, wobei diese ganz gefüllt oder auch nur teilweise befüllt werden kann.

Anschließend wird das Projektil durch Ausstoß z.B. von unter geregeltem, auch hohem, Druck stehendem Wasser oder einem anderen geeigneten Fluid durch die Düseneinrichtung 30 zur Bewegung entlang der Bewegungstrajektorie B durch die Kavität 16 angetrieben, wobei es das noch fließfähige Gießmaterial aus dem Inneren der Kavität 16 (also die Gießmaterial-Seele) verdrängt, z.B. in eine in den Figuren nicht dargestellte Nebenkavität, so dass nur noch das an den Kavitätswänden 16w erstarrte Gießmaterial in der Kavität verbleibt.

Dabei kann sich das Projektil 20 aufgrund seiner erfindungsgemäß vorgesehenen elastischen Drucksteifigkeit an einen veränderten Querschnitt der Kavität 16 insbesondere im Bereich der Kavitätsengstelle, d. h. im Kavitätsabschnitt 16b, anpassen, ohne das an den Kavitätswänden 16w erstarrte bzw.erstarrende Gießmaterial zu beschädigen und, sobald es diesen Kavitätsabschnitt 16b verlassen hat, wieder seine ursprüngliche Form annehmen, so dass ein hohler Gussgegenstand 12 mit variablem Querschnitt und im Wesentlichen konstanter Wandstärke w in hoher Qualität hergestellt werden kann.

## Patentansprüche

1. Gießvorrichtung (10; 110) zur Herstellung eines hohlen Gussgegenstandes (12; 112), umfassend:
• ein Formwerkzeug (14; 114) mit einer Kavität (16; 116),
• eine Füllvorrichtung (18; 118) zum Einfüllen von Gießmaterial im fließfähigen Zustand in die Kavität (16; 116),
• ein Projektil (20; 120),
• eine Verdrängungsvorrichtung (22; 122), die dazu ausgebildet ist, das Projektil (20; 120) zu einer Bewegung entlang einer Bewegungstrajektorie (B) in das in die Kavität (16;116) eingefüllte Gieß-material anzutreiben,
wobei die Kavität (16; 116) wenigstens zwei entlang der Bewegungstrajektorie (B) des Projektils (20; 120) aufeinander folgend angeordnete Kavitätsabschnitte (16a, 16b, 16c; 116a; 116b; 116c) aufweist, deren Querschnitte (Qa, Qb, Qc) senkrecht zur Bewegungstrajektorie (B) unterschiedlich geformt sind,
**dadurch gekennzeichnet, dass** das Projektil (20;120) einen aus einem bis zu 350°C temperaturbeständigen Verformungsmaterial gebildeten Verformungsabschnitt aufweist, wobei das Verformungsmaterial eine geringere elastische Drucksteifigkeit als das Gießmaterial in dem Sinne aufweist, dass ein aus dem Verformungsmaterial bestehender, würfelförmiger Probekörper eine geringere elastische Drucksteifigkeit aufweist als ein in Gestalt und Größe gleicher Probekörper, der aus dem Gießmaterial im erstarrten Zustand besteht.

2. Gießvorrichtung (10; 110) nach Anspruch 1,
**dadurch gekennzeichnet, dass** das gesamte Projektil (20; 120) aus dem Verformungsmaterial gebildet ist.

3. Gießvorrichtung (10; 110) nach einem der vorhergehenden Ansprüche,
**dadurch gekennzeichnet, dass** das Verformungsmaterial Silikon umfasst.

4. Gießvorrichtung (10; 110) nach einem der vorhergehenden Ansprüche,
**dadurch gekennzeichnet, dass** das Projektil (20; 120) im Wesentlichen hohl ausgebildet ist, wobei ein erstes Längsende (20a) des Projektils (20; 120) offen und ein zweites Längsende (20b) geschlossen ausgebildet ist.

5. Gießvorrichtung (10; 110) nach Anspruch 4,
**dadurch gekennzeichnet, dass** das Projektil (20; 120) mit einer im Wesentlichen konstanten Wandstärke (w) ausgebildet ist.

6. Gießvorrichtung (10; 110) nach einem der vorhergehenden Ansprüche,
**dadurch gekennzeichnet, dass** die Flächen der Querschnitte (Qa, Qb) der beiden Kavitätsabschnitte (16a, 16b, 16c; 116a, 116b, 116c) senkrecht zur Bewegungstrajektorie (B) im Wesentlichen gleich groß sind.

7. Gießvorrichtung (10; 110) nach einem der vorhergehenden Ansprüche,
**dadurch gekennzeichnet, dass** die Kavität (16; 116) wenigstens drei entlang der Bewegungstrajektorie (B) des Projektils (20; 120) aufeinander folgend angeordnete Kavitätsabschnitte (16a, 16b, 16c; 116a, 116b, 116c) aufweist, deren Querschnitte (Qa, Qb, Qc) senkrecht zur Bewegungstrajektorie (B) unterschiedlich geformt sind, wobei die Form des Querschnitts (Qb) senkrecht zur Bewegungstrajektorie (B) des mittleren Kavitätsabschnitts (16b; 116b) sich von der Form des Querschnitts (Qa, Qc) senkrecht zur Bewegungstrajektorie (B) jedes der beiden anderen Kavitätsabschnitte (16a, 16c; 116a, 116c) unterscheidet.

8. Gießvorrichtung (10; 110) nach einem der vorhergehenden Ansprüche,
**dadurch gekennzeichnet, dass** sich der Querschnitt der Kavität senkrecht zur Bewegungstrajektorie (B) des Projektils (20; 120) innerhalb eines Kavitätsabschnitts oder/und am Übergang zwischen zwei entlang der Bewegungstrajektorie (B) des Projektils (20; 120) direkt aufeinander folgend angeordneten Kavitätsabschnitten (16a, 16b, 16c; 116a, 116b, 116c) kontinuierlich ändert.

9. Gießvorrichtung (10; 110) nach einem der vorhergehenden Ansprüche,
**dadurch gekennzeichnet, dass** die Verdrängungsvorrichtung (22; 122) eine Düseneinrichtung (30; 130) umfasst, die dazu ausgebildet ist, das Projektil (20; 120) durch Ausstoß von unter Druck stehendem Wasser entlang der Bewegungstrajektorie (B) in das in die Kavität eingefüllte Gießmaterial anzutreiben.

10. Gießverfahren zur Herstellung eines hohlen Gussgegenstandes (12; 112), insbesondere in einer Gießvorrichtung (10; 110) nach einem der vorhergehenden Ansprüche, umfassend die folgenden Schritte:
Einfüllen eines Gießmaterials im fließfähigen Zustand in eine Kavität (16; 116) eines Formwerkzeugs (14; 114), und
Antreiben eines Projektils (20; 120) zu einer Bewegung entlang einer Bewegungstrajektorie (B) in das in die Kavität (16; 116) eingefüllte Gießmaterial,
wobei sich das Projektil (20; 120) während seiner Bewegung entlang der Bewegungstrajektorie (B) wenigstens in einem Verformungsabschnitt des Projektils (20; 120) verformt, **dadurch gekennzeichnet,**
**dass** das Verfahren weiter die Schritte umfasst:
Auswählen des Projektils (20; 120), welches einen aus einem bis zu 350°C temperaturbeständigen Verformungsmaterial gebildeten Verformungsabschnitt aufweist, wobei das Verformungsmaterial eine geringere elastische Drucksteifigkeit als das Gießmaterial in dem Sinne aufweist, dass ein aus dem Verformungsmaterial bestehender, würfelförmiger Probekörper eine geringere elastische Drucksteifigkeit aufweist als ein in Gestalt und Größe gleicher Probekörper, der aus dem Gießmaterial im erstarrten Zustand besteht, und
Einlegen des Projektils (20; 120) in die Kavität (16; 116) vor dem Schritt des Antreibens.

11. Gießverfahren nach Anspruch 10,
**dadurch gekennzeichnet, dass** sich das Projektil (20; 120) während seiner Bewegung entlang der Bewegungstrajektorie (B) wenigstens in einem Verformurigsabschnitt des Projektils (20; 120) vorwiegend elastisch verformt, vorzugsweise vollständig elastisch verformt.

12. Gießverfahren nach Anspruch 10 oder 11,
**dadurch gekennzeichnet, dass** sich das Projektil (20; 120) während seiner Bewegung entlang der Bewegungstrajektorie (B) derart verformt, dass während eines Bewegungsabschnitts ein radialer Abstand (r) zwischen einer im Wesentlichen parallel oder tangential zur Bewegungstrajektorie (B) verlaufenden Projektil-Längsachse (P) und einer Projektil-Außenwand (20w; 120w) zumindest in einem axialen Abschnitt des Projektils (20; 120) und in einem Umfangsabschnitt des Projektils (20; 120) kleiner wird.

13. Gießverfahren nach Anspruch 12,
**dadurch gekennzeichnet, dass** sich das Projektil (20; 120) während seiner Bewegung entlang der Bewegungstrajektorie (B) derart verformt, dass während eines Bewegungsabschnitts ein radialer Abstand (r) zwischen einer im Wesentlichen parallel oder tangential zur Bewegungstrajektorie (B) verlaufenden Projektil-Längsachse (P) und einer Projektil-Außenwand (20w; 120w) zumindest in einem axialen Abschnitt des Projektils (20; 120) über den gesamten Umfang des Projektils (20; 120) kleiner wird.

14. Gießverfahren nach einem der Ansprüche 10 bis 13, insbesondere nach Anspruch 13,
**dadurch gekennzeichnet, dass** sich das Projektil (20; 120) bei seiner Bewegung entlang der Bewegungstrajektorie (B) derart verformt, dass während eines Bewegungsabschnitts das Projektil (20; 120) in Richtung der Projektil-Längsachse (P) länger wird.

15. Verfahren nach einem der Ansprüche 10 bis 14,
**dadurch gekennzeichnet, dass** das Projektil (20; 120) bei der Bewegung entlang der Bewegungstrajektorie (B) derart gegenüber der Kavität (16 ; 116) dichtend wirkt, dass es verhindert, dass ein Antriebsmedium, welches zum Antreiben des Projektils (20; 120) verwendet wird, an dem Projektil (20; 120) vorbeiströmt.

## Claims

1. A moulding device (10; 110) for the production of a hollow moulded article (12; 112), comprising:
a mould (14; 114) with a cavity (16; 116),
a filling device (18; 118) for filling a moulding material in the free-flowing state into the cavity (16; 116),
a projectile (20; 120),
a displacement device (22; 122), which is designed to drive the projectile (20; 120) to move along a motion trajectory (B) into the moulding material filled into the cavity (16; 116),
wherein the cavity (16; 116) comprises at least two cavity portions (16a, 16b, 16c; 116a; 116b; 116c) arranged in succession along the motion trajectory (B) of the projectile (20; 120), wherein cross-sections (Qa, Qb, Qc) of these portions perpendicular to the motion trajectory (B) are shaped differently,
**characterised in that** the projectile (20; 120) comprises a deformation portion formed of a deformation material which is heat-resistant up to 350 °C, the deformation material having a lower elastic compressive stiffness than the moulding material to the effect that a cubic test specimen consisting of the deformation material has a lower elastic compressive stiffness than a test specimen of identical shape and size which consists of the moulding material in the solidified state.

2. A moulding device (10; 110) according to claim 1,
**characterised in that** the entire projectile (20; 120) is formed of the deformation material.

3. A moulding device (10; 110) according to any one of the preceding claims,
**characterised in that** the deformation material comprises silicone.

4. A moulding device (10; 110) according to any one of the preceding claims,
**characterised in that** the projectile (20; 120) is substantially hollow, a first longitudinal end (20a) of the projectile (20; 120) being open and a second longitudinal end (20b) being closed.

5. A moulding device (10; 110) according to claim 4,
**characterised in that** the projectile (20; 120) has a substantially constant wall thickness (w).

6. A moulding device (10; 110) according to any one of the preceding claims,
**characterised in that** the areas of the cross sections (Qa, Qb) of the two cavity portions (16a, 16b, 16c; 116a, 116b, 116c), perpendicular to the motion trajectory (B), are substantially identical in size.

7. A moulding device (10; 110) according to any one of the preceding claims,
**characterised in that** the cavity (16; 116) comprises at least three cavity portions (16a, 16b, 16c; 116a; 116b; 116c) arranged in succession along the motion trajectory (B) of the projectile (20; 120), which portions are of differently shaped cross-sections (Qa, Qb, Qc) perpendicular to the motion trajectory (B), the shape of the cross section (Qb) perpendicular to the motion trajectory (B) of the middle cavity portion (16b; 116b) differing from the shape of the cross-section (Qa, Qc) perpendicular to the motion trajectory (B) of each of the other two cavity portions (16a, 16c; 116a, 116c).

8. A moulding device (10; 110) according to any one of the preceding claims,
**characterised in that** that the cross-section of the cavity, perpendicular to the motion trajectory (B) of the projectile (20; 120), changes continuously within one cavity portion and/or at the point of transition between two cavity portions (16a, 16b, 16c; 116a, 116b, 116c) arranged in direct succession along the motion trajectory (B) of the projectile (20; 120).

9. A moulding device (10; 110) according to any one of the preceding claims,
**characterised in that** the displacement device (22; 122) comprises a nozzle means (30; 130) which is designed to drive the projectile (20; 120) along the motion trajectory (B) into the moulding material filled into the cavity by the ejection of pressurised water.

10. A moulding method for the production of a hollow moulded article (12; 112), in particular in a moulding device (10; 110) according to any one of the preceding claims, comprising the following steps:
filling a moulding material in the free-flowing state into a cavity (16; 116) of a mould (14; 114) and
driving a projectile (20; 120) to move along a motion trajectory (B) into the moulding material filled into the cavity (16; 116),
wherein the projectile (20; 120) deforms at least in a deformation portion of the projectile (20; 120) as it moves along the motion trajectory (B), **characterised in that** the method furthermore comprises the following steps:
selecting the projectile (20; 120) having a deformation portion formed of a deformation material which is heat-resistant up to 350 °C, the deformation material having lower elastic compressive stiffness than the moulding material to the effect that a cubic test specimen consisting of the deformation material has a lower elastic compressive stiffness than a test specimen of identical shape and size which consists of the moulding material in the solidified state, and
inserting the projectile (20; 120) into the cavity (16; 116) before the step of driving.

11. A moulding method according to claim 10,
**characterised in that** the projectile (20; 120) deforms predominantly elastically, preferably completely elastically, as it moves along the motion trajectory (B), at least in a deformation portion of the projectile (20; 120).

12. A moulding method according to claim 10 or claim 11,
**characterised in that** the projectile (20; 120) deforms as it moves along the motion trajectory (B) in such a way that, during one portion of its motion, a radial distance (r) between a longitudinal projectile axis (P) extending substantially parallel or tangentially to the motion trajectory (B) and an outer projectile wall (20w; 120w) becomes smaller at least in one axial portion of the projectile (20; 120) and in one circumferential portion of the projectile (20; 120).

13. A moulding method according to claim 12,
**characterised in that** the projectile (20; 120) deforms during its movement along the motion trajectory (B) in such a way that, during one portion of its motion, a radial distance (r) between a longitudinal projectile axis (P) extending substantially parallel or tangentially to the motion trajectory (B) and an outer projectile wall (20w; 120w) becomes smaller at least in one axial portion of the projectile (20; 120) over the entire circumference of the projectile (20; 120).

14. A moulding method according to any one of claims 10 to 13, in particular according to claim 13,
**characterised in that** the projectile ( 20; 120) deforms as it moves along the motion trajectory (B) in such a way that, during one portion of its motion, the projectile (20; 120) becomes longer in the direction of the longitudinal projectile axis (P).

15. A method according to any one of claims 10 to 14,
**characterised in that** the projectile (20; 120) performs a sealing function relative to the cavity (16; 116) as it moves along the motion trajectory (B) in such a way that it prevents a drive medium used to drive the projectile (20; 120) from flowing past the projectile (20; 120).

## Revendications

1. Dispositif de moulage (10; 110) pour la fabrication d'un objet creux (12; 112), comprenant:
· un outil de formage (14; 114) avec une cavité (16; 116),
· un dispositif de remplissage (18; 118) pour l'introduction de matière de moulage à l'état fluide dans la cavité (16; 116),
· un projectile (20; 120),
· un dispositif de refoulement (22; 122) qui est conçu pour entraîner le projectile (20; 120) dans un mouvement le long d'une trajectoire de déplacement (B) dans la matière de moulage introduite dans la cavité (16; 116),
la cavité (16; 116) présentant au moins deux sections de cavité (16a, 16b, 16c; 116a; 116b; 116c) disposées successivement le long de la trajectoire de déplacement (B) du projectile (20; 120), dont les sections transversales (Qa, Qb, Qc) perpendiculairement à la trajectoire de déplacement (B) sont de formes différentes,
**caractérisé en ce que** le projectile (20; 120) présente une section de déformation en matériau de déformation résistant en température jusqu'à 350°C, le matériau de déformation présentant une rigidité élastique en pression inférieure à celle de la matière de moulage au sens qu'un échantillon en forme de cube du matériau de déformation présente une rigidité élastique en pression inférieure à celle d'un échantillon de forme et taille identiques qui est constitué de la matière de moulage dans l'état solidifié.

2. Dispositif de moulage (10; 110) suivant la revendication 1,
**caractérisé en ce que** l'ensemble du projectile (20; 120) est formé dans le matériau de déformation.

3. Dispositif de moulage (10; 110) suivant l'une des revendications précédentes, **caractérisé en ce que** le matériau de déformation comprend de la silicone.

4. Dispositif de moulage (10; 110) suivant l'une des revendications précédentes, **caractérisé en ce que** le projectile (20; 120) est essentiellement creux, une première extrémité longitudinale (20a) du projectile (20; 120) étant ouverte et une deuxième extrémité longitudinale (20b) étant fermée.

5. Dispositif de moulage (10; 110) suivant la revendication 4,
**caractérisé en ce que** le projectile (20; 120) est formé avec une épaisseur de paroi (w) essentiellement constante.

6. Dispositif de moulage (10; 110) suivant l'une des revendications précédentes, **caractérisé en ce que** les surfaces des sections transversales (Qa, Qb) des deux sections de cavité (16a, 16b, 16c; 116a, 116b, 116c) sont essentiellement de même taille perpendiculairement à la trajectoire de déplacement (B).

7. Dispositif de moulage (10; 110) suivant l'une des revendications précédentes, **caractérisé en ce que** la cavité (16; 116) présente au moins trois sections de cavité (16a, 16b, 16c; 116a; 116b; 116c) disposées successivement le long de la trajectoire de déplacement (B) du projectile (20; 120), dont les sections transversales (Qa, Qb, Qc) perpendiculairement à la trajectoire de déplacement (B) sont de formes différentes, la forme de la section transversale (Qb) perpendiculairement à la trajectoire de déplacement (B) de la section de cavité médiane (16b; 116b) différant de la forme de la section transversale (Qa, Qc) perpendiculairement à la trajectoire de déplacement (B) de chacune des deux autres sections de cavité (16a, 16c; 116a, 116c).

8. Dispositif de moulage (10; 110) suivant l'une des revendications précédentes, **caractérisé en ce que** la section transversale de la cavité perpendiculairement à la trajectoire de déplacement (B) du projectile (20; 120) change en continu à l'intérieur d'une section de cavité ou/et à la transition entre deux sections de cavité (16a, 16b, 16c; 116a, 116b, 116c) disposées en succession directe le long de la trajectoire de déplacement (B) du projectile (20; 120).

9. Dispositif de moulage (10; 110) suivant l'une des revendications précédentes, **caractérisé en ce que** le dispositif de refoulement (22; 122) comprend un dispositif à buse (30; 130) qui est conçu pour entraîner le projectile (20; 120) dans la matière de moulage introduite dans la cavité par l'éjection d'eau sous pression le long de la trajectoire de déplacement (B).

10. Procédé de moulage pour la fabrication d'un corps creux (12; 112), en particulier dans un dispositif de moulage (10; 110) suivant l'une des revendications précédentes, comprenant les étapes suivantes: introduction d'une matière de moulage à l'état fluide dans une cavité (16; 116) d'un outil de formage (14; 114), et
entraînement d'un projectile (20; 120) dans un mouvement le long d'une trajectoire de déplacement (B) dans la matière de moulage introduite dans la cavité (16; 116),
le projectile (20; 120) se déformant pendant son mouvement le long de la trajectoire de déplacement (B) au moins dans une section de déformation du projectile (20; 120), **caractérisé en ce que** le procédé comprend en outre les étapes suivantes:
sélection du projectile (20; 120), lequel présente une section de déformation en matériau de déformation résistant en température jusqu'à 350°C, le matériau de déformation présentant une rigidité élastique en pression inférieure à celle de la matière de moulage au sens qu'un échantillon en forme de cube du matériau de déformation présente une rigidité élastique en pression inférieure à celle d'un échantillon de forme et taille identiques qui est constitué de la matière de moulage dans l'état solidifié, et placement du projectile (20; 120) dans la cavité (16; 116) avant l'étape de l'entraînement.

11. Procédé de moulage suivant la revendication 10,
**caractérisé en ce que** le projectile (20; 120) pendant son mouvement le long de la trajectoire de déplacement (B) se déforme principalement de manière élastique au moins dans une section de déformation du projectile (20; 120), de préférence de manière entièrement élastique.

12. Procédé suivant la revendication 10 ou 11,
**caractérisé en ce que** le projectile (20; 120) se déforme pendant son mouvement le long de la trajectoire de déplacement (B) de telle manière que pendant une section de mouvement une distance radiale (r) entre un axe longitudinal du projectile (P) s'étendant essentiellement parallèlement ou tangentiellement à la trajectoire de déplacement (B) et une paroi extérieure du projectile (20w; 120w) devient plus petite au moins dans une section axiale du projectile (20; 120) et dans une section périphérique du projectile (20; 120).

13. Procédé de moulage suivant la revendication 12,
**caractérisé en ce que** le projectile (20; 120) se déforme pendant son mouvement le long de la trajectoire de déplacement (B) de telle manière que pendant une section de mouvement une distance radiale (r) entre un axe longitudinal du projectile (P) s'étendant essentiellement parallèlement ou tangentiellement à la trajectoire de déplacement (B) et une paroi extérieure du projectile (20w; 120w) devient plus petite au moins dans une section axiale du projectile (20; 120) et sur l'ensemble de la périphérie du projectile (20; 120).

14. Procédé de moulage selon l'une des revendications 10 à 13, en particulier suivant la revendication 13,
**caractérisé en ce que** le projectile (20; 120) pendant son mouvement le long de la trajectoire de déplacement (B) se déforme de telle manière que, pendant une section de mouvement, le projectile (20; 120) devient plus long en direction de l'axe longitudinal du projectile (P).

15. Procédé suivant l'une des revendications 10 à 14,
**caractérisé en ce que** le projectile (20; 120), lors du mouvement le long de la trajectoire de déplacement (B), exerce une telle action d'étanchement vis-à-vis de la cavité (16; 116) qu'il empêche qu'un milieu d'entraînement qui est utilisé pour l'entraînement du projectile (20; 120) s'écoule le long du projectile (20; 120).
